# EUROPEAN PATENT SPECIFICATION

(11) **EP 3 002 206 B1**
(45) Date of publication and mention of the grant of the patent: **24.07.2019**
(21) Application number: 14186990.9
(22) Date of filing: 30.09.2014
(51) Int. Cl.: B63B 9/00, B63B 25/00, G01M 5/00, G05D 1/08

(54) **Improved vessel maneuverability**
Verbesserte Schiffsmanövrierbarkeit
Man'uvrabilité de navire améliorée

(43) Date of publication of application: 06.04.2016
(73) Proprietor: ABB Schweiz AG, 5400 Baden (CH)
(72) Inventor: Widlund, Ola, 129 39 Hägersten (SE); Sjöberg, Johan, 722 18 Västerås (SE); Molander, Mats, 722 10 Västerås (SE); Lindkvist, Rickard, 725 91 Västerås (SE); Tervo, Kalevi, 02720 Espoo (FI)
(74) Representative: Savela, Reino Aleksi

(56) References cited:
- WO-A1-96/18866
- WO-A1-99/11517
- WO-A1-03/043880
- DE-A1-102008 028 301

## Description

### FIELD OF THE INVENTION

The present invention relates to vessels. More particularly, the invention relates to manoeuvrability handling arrangement and to a method, and computer program product for handling the manoeuvrability of a vessel equipped with a hull.

### BACKGROUND

Large vessels, such as cargo or container ships, crossing the oceans consume a lot of fuel. This fact has triggered the search of ways to reduce the fuel consumption. One method is optimization of the so called trim, which is a measure of the distribution of the ballast in the vessel. The trim may be represented by the horizontal angle of the vessel in the sea. Trim optimization is now a quite established functionality.

One trim optimization method is described in US 7389165.

Document DE102008028301 discloses a method which involves supplying signals from the sensors arranged in the ship hull to a loading computer that is provided for controlling the loading and unloading of a ship. The loading computer displays an actual mechanical deformation condition of the ship hull.

The trim optimization methods are all based on an underlying principle that the hull of the ship is a mechanically stiff body. The trim that is deemed to be optimal may have been set for a nominal hull shape, such as the hull shape of an un-loaded vessel, i.e. the hull shape of a vessel without cargo, or a vessel with a nominal load.

However, the cargo carried by such a vessel may be of considerable weight. This may have a non-negligible influence of the ship hull shape. Furthermore also the distribution of the cargo may have an influence on the hull shape. A ship having the majority of the cargo weight close to the stern and bow may for instance have a very different hull shape than a ship having the majority of the cargo weight placed midships.

Furthermore, since the hull shape may deviate from the nominal shape based on cargo weight and distribution, this also means that a trim assumed to be optimal may in fact not at all be that.

This may lead to a non-optimal fuel consumption leading to higher transportation costs than expected. However, there are also other disadvantages. As an estimation of the fuel consumption may be made, it is also clear that the trim used may lead to more fuel being consumed than expected.

Furthermore, the hull shape may also have an influence when estimating other manoeuvrability data of a ship such as turning radius and braking distance. If a wrong assumption of ship hull shape is used, these estimations may also become unreliable.

There is therefore a need for also employing the ship hull shape deformation as an input to manoeuvrability functions of a vessel.

### SUMMARY OF THE INVENTION

The present invention addresses this situation. The invention is therefore directed towards solving the problem of providing an improvement in relation to ship hull deformation.

This object is according to a first aspect of the invention solved through a method according to claim 1.

This object is according to a second aspect of the invention solved through an arrangement for handling the manoeuvrability of a vessel equipped with a hull, as defined by claim 12.

This object is according to a third aspect of the invention achieved through computer program product for handling manoeuvrability of a vessel, according to claim 19.

The present invention has a number of advantages. According to the invention ship hull deformation is considered in a manoeuvring handling function. Thereby better results are obtained from the function if the hull is deformed. This can be used to improve manoeuvring in a number of different ways. It is for instance possible to improve power consumption. However, also other things can be improved. It is also possible to improve such things as the determination of turning radius and braking distance in case of hull deformation.

### BRIEF DESCRIPTION OF THE DRAWINGS

The present invention will in the following be described with reference being made to the accompanying drawings, where
Fig. 1 schematically shows a vessel in the form of a ship having a bridge,
Fig. 2 schematically shows the bridge comprising a number of windows and a computer functioning as a manoeuvrability signalling arrangement,
Fig. 3 schematically shows a computerized control system controlling various operations of the ship and including the manoeuvrability signalling arrangement,
Fig. 4 schematically shows a first type of hull deformation,
Fig. 5 schematically shows a second type of hull deformation,
Fig. 6 shows a flow chart of a number of method steps being performed in a method of handling manoeuvrability,
Fig. 7 schematically shows a screen depicting various ship manoeuvrability data having been determined for a deformed ship hull, and
Fig. 8 schematically shows a data carrier with computer program code, in the form of a CD-ROM disc, for performing the steps of the method.

### DETAILED DESCRIPTION OF THE INVENTION

In the following, a detailed description of preferred embodiments of a method, manoeuvrability handling arrangement and computer program product for handling the manoeuvrability of a vessel equipped with a hull will be given.

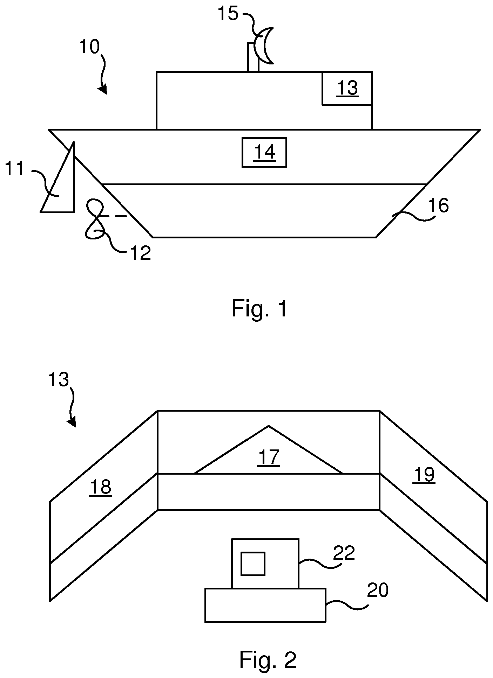

Fig. 1 schematically shows a vessel exemplified by a ship 10. The ship 10 shown in fig. 1 comprises a hull 16, a rudder 11, a propeller 12, a draft sensor 14 as well as a radar 15. The rudder 11 and propeller 12 may with advantage be combined in an azimuthing podded propulsion device, such as an Azipod. The draft sensor 14 may be placed on the hull 16. The propeller 12 is also connected to an engine (not shown) in order to propel the ship forward or backward. In order to control the propeller 12 and engine as well as the rudder 11, the ship 10 is also provided with a bridge 13, where various aspects of the ship 10 can be controlled. The rudder 11, propeller 12, engine, draft sensor 14 and radar 15 are examples of entities used in relation to the steering of the ship 10. On the ship there are furthermore ballast tanks (not shown), which may be filled with liquid such as water in order to influence the steering of the vessel. In the figure only one propeller is shown. It should be realized that there may be more propellers, for instance in the bow. It may also be possible to move the ship sideways with certain type of motors.

Fig. 2 schematically shows the bridge 13. The bridge comprises three windows 17, 18 and 19, a first front window 17 facing the bow, a second starboard side window 19 and a third port side window 18. The windows are thus placed on the bridge 13. On the bridge there is also a bridge computer 20 with a display 22. The bridge computer 20 is according to some variations of the invention used for forming a manoeuvrability handling arrangement and the display 22 is an operator user interface via which a ship operator can make various selections with regard ship operations and see various ship operations data, which ship operations data comprises manoeuvrability data.

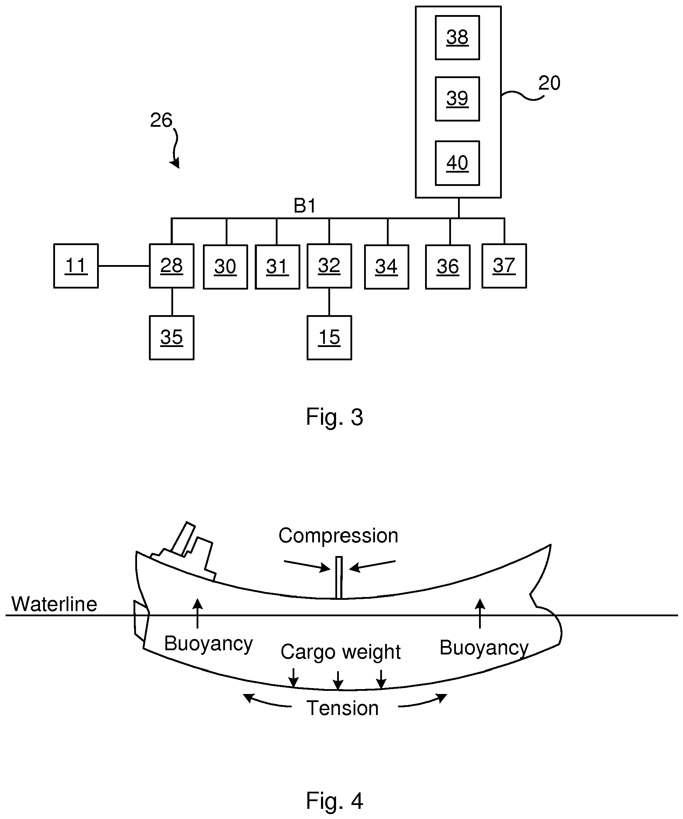

Fig. 3 shows a block schematic of a simplified control system 26 that may be used for controlling the ship. The control system 26 is a computerized control system.

In fig. 3 the control system 26 includes a number of work stations. In this example only one work station is shown, the above-mentioned bridge computer 20. It should however be realized that there may be several work stations for instance in other areas of the ship. As the bridge computer is used for forming a manoeuvrability handling arrangement it comprises a manoeuvring handling unit 38, a parameter correction unit 39 and a deviation determining unit 40. The manoeuvring handling unit 38 provides a manoeuvring handling function, such as a trim optimization function or a fuel consumption optimizing function. Other examples of manoeuvring handling functions are a turning radius determining function and a braking distance determining function. Furthermore, it should be realized that in one embodiment of the invention there is no parameter correction unit 39.

As an example the bridge computer 20 may be connected to a data bus B1. The use of a data bus is just one way of realizing data communication. It should be realized that other ways exist, for instance point-to-point connections.

There are furthermore a group of vessel handling computers connected to the bus 10, which computers are provided for handling various aspects of the vessel, such as navigation and security aspects. These computers more particularly provide data of different types employed in the navigation and steering of the vessel.

There is here a manoeuvring control computer 28, a forecasting computer 30, a load computer 31, a tracking computer 32, a chart computer 34, a sensor handling computer 36 and an external indications computer 37.

These computers are involved in handling various aspects of the ship. The manoeuvring control computer 28 may be involved with controlling manoeuvring such as steering using the rudder and controlling direction and speed through controlling the propeller. For this reason it is connected to the engine 35 and to the rudder 11. It may also control the ballast tanks in order to further influence the manoeuvrability. It may for this reason be connected to valves of the tanks in order to control filling and emptying of such tanks (not shown). The forecasting computer 30 is a computer used for keeping track of the weather and receives weather forecast data from weather forecast services. The data may comprise weather forecasts such as forecasts of low pressure areas, their movements and their wind speeds. This computer 30 is therefore used for keeping track of weather changes and the movement of weather systems such as the movement of storms. The load computer 31 keeps track of the distribution and weight of the load or cargo on the vessel. The tracking computer 32 is used for tracking other vessels and is therefore connected to the radar 15. This computer 32, which may be part of an Automatic Identification (AIS) system, is thus used for keeping track of mobile objects in the environment. The chart computer 34 comprises navigation charts of the waters through which the ship is to move. The chart computer 34 therefore keeps track of stationary objects or obstacles in the environment. The chart computer 34 may also comprise route data, i.e. data defining a route that the ship is to take.

The sensor handling computer 36 is provided for receiving sensor data such as position data, speed data, as well as the trim, the list and the draft of the vessel, where the draft describes i.e. how deep into the water the vessel sails, which may be expressed through points of the hull where the waterline is crossed. The trim is a measure of the ballast distribution of the ship. For this reason the draft sensor 14 may be connected to the sensor handling computer 36. The draft data may be detected by the previously described draft sensor. The sensor 14 may be placed on a position on the hull and sense the distance from this position to the waterline. It should be realized that the draft sensor does not need to be placed on the hull as long as it is able to sense the distance to the waterline. It may as an example be placed on the bridge or on a part of a mast. The trim may be represented by one or more angles between the keel and the water. List may on the other hand be a horizontal angle of the vessel in the sea at right angles to the above mentioned trim. Various sensors may for this reason be placed at different locations of the ship. A position sensor may be a Global Positioning Sensor.

Finally the external indications computer 37 is provided for receiving external indications such as piracy indications and/or International Ship and Port Facility Security (ISPS) security indications.

The bridge 13 of the ship is surrounded by the windows 17, 18 and 19 for the crew of the ship to be able to visually observe the environment of the ship. The bridge may comprise a main bridge and possibly two wing bridges on the port and starboard sides in order to enable support to be given to the captain or navigator as he or she manoeuvres the ship.

User interface screens for visualizing information related to navigation, voyage and ship management systems may be located around the bridge so that they are visible when a crew member is seated or standing next to a pilot chair/station. In this setting there may furthermore be meters above the windows. A crew member standing at the main bridge, can then also look at the meters to see different values related to velocity, pitch, trim and fuel consumption etc.

On ships such as cargo ships power consumption, such as fuel consumption, may be an issue. One way of influencing the fuel consumption is through influencing the trim of the ship, where the trim has traditionally been represented by the horizontal angle of a rigid vessel in the sea. The trim may in this case be influenced through emptying and filling different ballast tanks in the length direction of the ship

The determination of the fuel consumption has thus traditionally been based on the assumption that the ship hull is a stiff body having a nominal hull shape. The nominal hull shape may be the hull shape of an un-loaded vessel, i.e. a vessel without cargo. It may as an alternative be the hull shape of a vessel with a nominal load, which nominal load may be a load for which various ship/hull properties, such as trim, may be optimized.

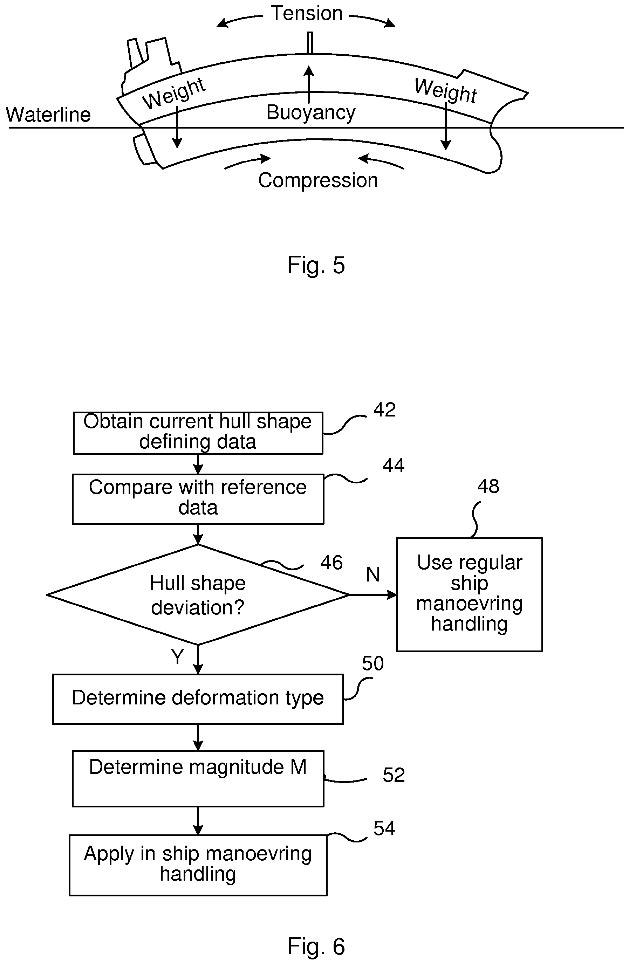

However the cargo of a ship, such as a cargo or container vessel, will have a considerable weight which, depending on how it its distributed, may also influence the shape of the ship hull. The hull may thus be deformed slightly, depending on the lengthwise distribution of the load. Fig. 4 schematically shows one type of hull deformation and fig. 5 another type of hull deformation. The ship may be defined as "sagging" when the load is centred midships, with compression of the upper deck, see fig. 4. When the load is displaced towards the rear and aft, the ship may be defined as "hogging", with tension of the upper deck, see fig. 5. The shapes in fig. 4 and 5 are examples of two types of deformation that the hull may experience. Furthermore the deviations shown in fig. 4 and 5 have been exaggerated in order to illustrate different deviating shapes of the hull.

The deformation of the hull has an effect on the ship resistance in the water and thereby also on the fuel consumption.

In trim optimizing functions an optimal trim may be determined as a trim providing the lowest fuel consumption. This determination is, as was previously mentioned, traditionally made using an assumption that the ship hull is not deformed but has the nominal shape. The optimal trim of a ship with deformed hull should thus differ from its nominal counterpart.

A conventional trim optimization system measures ship position in the water, speed and other operating conditions. It then predicts optimal trim, usually based on historical data and/or empirical correlations derived by hydrodynamic computations. A conventional trim optimization system does not consider hull deformation. This causes an error in the optimal trim prediction, or increases its variance.

One objective of the invention is to provide a manoeuvring handling function, such as a trim optimization function, which function uses information about the shape of the hull, as it is deformed by loading conditions in order to provide an improved determination of desired manoeuvrability data.

An embodiment that is directed towards this will now be described with reference also being made to fig. 6, which shows a flow chart of a number of method steps in a method of handling manoeuvrability, which method is being performed by the manoeuvrability handling arrangement 20.

The method is started by the deviation determining unit 40 obtaining current hull shape defining data related to at least three positions of the hull 16 along the length of the ship, step 42. The hull shape defining data may be current draft data measured by draft data sensors on the ship hull, where one sensor may be provided at the bow, another at the stern and a third may be the sensor 14 placed midships. The sensors may thus be sensors sensing the draft of the ship at three positions, for instance fixed, along the length of the ship. Draft data may then be obtained through measuring the distance from the sensor to the waterline. The distance may as an example be measured using microwave radars, ultrasound devices or lasers. This is a direct draft measurement.

Alternatively, it is possible that ship hull defining data also comprises local inclination readings, for instance using accelerometers. It is for instance possible to combine draft data from one position with inclination data from two other positions. This means that in addition to the draft sensor 14 it is also possible to use at least two accelerometers. Draft data may also be draft data input by a user after visual inspection of a plimsoll line or a draft mark on the hull. As an alternative to such manual entry it is also possible to capture images of the hull and determine the draft based on image processing with regard to the above-mentioned draft marks or plimsoll lines. Yet another alternative is to use pressure sensors and convert the sensed pressure to a corresponding draft.

As an alternative it is possible that the deviation determining unit 40 has a draft estimating function, which estimates the draft of the ship at various positions on the hull. The draft estimating function may estimate the current draft based on cargo data and data of properties of the ship. The cargo data may be obtained from the load computer 31 and may comprise data about the mass and distribution of the cargo in the longitudinal direction. The properties of the ship may comprise data about the thickness, shape and material of the hull as well as information about major stationary machines of the ship that are mechanically linked to the hull. One such machine may be a ship engine. The cargo data and ship properties are thus used for determining the draft at said at least three positions on the ship hull. In this determination the properties of the water are typically also considered. Alternatively the load computer 31 may calculate the current draft at the positions based on the ship and cargo properties and supply these to the deviation determining unit 40. As yet another alternative the load computer 31 may calculate the draft for one position, which draft data is combined with inclinometer readings from at least two positions. This draft data may also be manually input by a user or kept constant.

The current hull shape defining data of the at least three positions is then compared with corresponding reference data, step 44, where the reference data may be related to the positions of the current hull shape defining data. For the positions where the current hull shape defining data is measured or estimated there may exist reference data obtained in relation to the nominal hull shape. This reference data may also have been obtained using measurements or estimated using knowledge of the hulls and ship properties. When the positions are positions where measurements have been made, the reference data may have been measured at the same positions. In the case of estimation, the current data may be the draft at a position in the longitudinal direction of the ship and the reference data may then be the draft at the same position in the longitudinal direction of the ship. Vertically though the positions may differ.

The deviation determining unit 40 thus compares the current hull shape defining data with the reference data in order to investigate if there is any difference between the current hull shape defining data and the reference data. If there is no difference between the current hull shape defining data and the reference data, step 46, there is no hull shape deviation. This means that the difference in draft for the positions in question is negligible or even non-existent. Therefore ordinary ship manoeuvring handling is performed, step 48. This means that the deviation determining unit 40 instructs the manoeuvring handling unit 38 to perform standard manoeuvring handling. If the manoeuvring handling function is a trim optimisation function, this function would perform normal trim optimisation, i.e. using the assumption that the ship hull is a stiff body. If determining trim, it is then possible to use power consumption, speed, wind, waves, draft, trim angle, list angle, etc. in this determination.

However, if there is a difference between the current hull shape defining data and the reference data, step 46, then there is a ship hull shape deformation. Therefore the deviation determining unit 40 determines a state of deformation of the hull 16 for a type of deformation of the ship hull based on the deviation of the current hull shape defining data from the corresponding reference data. It may also determine or set the type of deformation based on the same deviation. Alternatively the type of deformation may be pre-set.

As mentioned earlier, the ship hull may receive a deformed shape that depends on how the load is distributed as well as that depends on the mechanical design, i.e. that depends on the mechanical properties of the ship, for instance on strength. Based on the difference between the actual hull shape defining data and the reference data, for instance the difference in positions where the hull intersects the waterline, it is then possible to determine which out of a number of limited types of deformations the cargo has caused, step 52. Two parabolic examples were given in fig. 4 and 5. Other examples of types of deformations or types of shapes are sinusoidal shapes. The shapes may be shapes with one minimum or maximum along the length of the ship, although more complex shapes can be considered, if enough measurements exist. The way the ship deforms (its shape) is usually characteristic of given ship mechanical design, as some sections of the ship may be stiffer than others and engines/machines have fixed positions. The expected modes (shapes) of deformation can therefore be defined beforehand, based on existing knowledge about the ship mechanical design. This also means that the type of deformation may be associated with a mathematical hull shape model, defining the longitudinal shape of the hull, where the magnitude is used to set the parameters of this mathematical model of the set type of deformation.

In one variation of the invention, there is only one type of shape associated with the ship. It is thus possible that only one type of hull deformation is possible given the structure of the hull and the way machines are linked to it.

If there is more than one shape, it is possible to determine type of deformation through investigating how well the mathematical hull shape models are matched. The best match may then be selected.

When the type of shape has been set it is then possible to determine the degree of deviation from the predefined shape. The degree of deviation or state of deformation may be determined as a magnitude M of deformation, step 52. Assuming modes with one minimum/maximum along the length of the ship, for example, the state of deformation can then be described by one single (signed) scalar, the magnitude M.

When the state of deformation has been determined, this and the type of deformation are then used in a manoeuvring handling function, where the manoeuvring handling function is provided by the manoeuvring handling unit 38. The state of deformation of the set type is thus applied in the manoeuvring handling function of the manoeuvring handling unit and this is done in order to improve handling of the vessel.

In the first embodiment this is done through the assistance of the parameter correction unit 39. Therefore the deviation determining unit 40 forwards the magnitude and optionally also a setting of the type to the parameter correction unit 39.

The parameters used by the manoeuvring handling function in the manoeuvring handling unit 38 are the parameter power consumption and may as an example be the parameters speed, wind, waves, draft, trim and list. In this case the parameter correction unit 39 may first select a model of the hull deformation type based on the setting. It may then adjust the parameters that are being input to the manoeuvring handling function using the magnitude in the model. It is possible that only some manoeuvring handling function parameters are adjusted. It is possible that only the internal ship parameters having a dependency on the hull such as speed, draft, trim and list are adjusted, while external parameters like wind and waves are not. The manoeuvring handling function thus operates as a traditional manoeuvring handling function. However, before the parameters are being input to the function they are adjusted in order for the manoeuvring handling function to actually consider the ship hull deviation.

The parameter correction unit 39 may do this through the correction function comprising a function of the deformation magnitude, with which each reading (data point) of data parameters fed to the manoeuvring handling function is corrected to reflect the corresponding reading of the non-deformed hull. Different formulations of correction functions can be envisioned, depending on to which parameter or quantity the correction is applied. When for instance the manoeuvring handling function is a power consumption optimizing function where a predicted a propulsion power is to be corrected (to compensate for hull deformation), the correction function may employ a set of data of actual or physical model tests or simulations of the joint effect of hull deformation and trim on power consumption for various vessel operating conditions. The set may for instance be provided in a table. In this case the correction function may perform numerical predictions on the data in the table. The numerical function may either be a numerical function fitted to the gathered data, or a procedure for interpolating correction factors from tabulated data. The set of data may also be provided in a neural network, which performs the same task (or any other "black box" providing an output value based on input variables). The numerical function may employ an empirical or semi-empirical model comprising the set of data.

In this way it is possible adjust the parameters input to the manoeuvring handling function so that the hull shape deviations are considered, which provides a more reliable manoeuvring handling function. The use of a correction function also avoids increasing the number of independent variables of the algorithm in the manoeuvring handling function.

In a second embodiment it is possible that there is no parameter correction unit 39. In this cases the deviation determining unit 40 may directly provide the magnitude M as a separate parameter and optionally also the deformation type as a setting to the manoeuvring handling unit 38. In this case a ship resistance prediction model that is used by the manoeuvring handling unit 38 is extended to also cover the different hull shapes. The manoeuvring handling function may thus employ a model of the hull shape to for instance determine the resistance of the ship in water. The hull deformation type model may first be selected based on the deformation type setting and parameters of this model may then be set through the magnitude. The resistance prediction model may in this case incorporate information obtained both from using a data-driven approach based on real measurements and empirical correlations found from computer simulations, for instance using Computational Fluid Dynamics (CFD).

The manoeuvring handling function may in both embodiments be a trim handling function, for instance a optimizing function used to determine an optimal trim. The output data of such a function is trim. The output data also comprises power consumption. The optimal trim is expected to depend on the state of deformation. It is also expected to exist a certain state of deformation, for which the optimal trim will yield a power consumption which is lower than for other deformation states, i.e. an optimal fuel consumption. The trim optimization function may furthermore help an operator to find both this optimal state of deformation and the optimal trim for this state (or any other non-optimal state) with regard to the power consumption.

The trim optimization function provided by the manoeuvring handling unit 38 may therefore be modified so that advice on optimal operation (trim and/or speed, for example) also accounts for the existing hull deformation. The deformation may in this case be a steady state deformation, which may be continually determined as a running average, where the changes in the loading condition, such as changes due to fuel consumption and ballast water pumping, are accounted for.

During loading, advice about the effect of hull deformation on power consumption and optimal trim may also be available to the operator, so that loading can be optimized accordingly.

The system can also offer the possibility of off-line simulations of hull deformation effects on operation.

The deformation described above is a static deformation, i.e. the steady-state deformation of the ship in calm water, due to the loading conditions of the ship. The hull may also deform dynamically, for example due to external waves and ship motion. The invention is not concerned with such dynamic deformation effects.

The invention was above described in relation to trim optimisation and fuel consumption optimisation. It should however be realized that also other functions may be adjusted. Ship hull deviations may for instance be used to adjust the determining of the turning radius of the ship. Turning radius may be determined based on trim, speed, rudder angles, list and draft. Another function that may be correspondingly adjusted is braking distance of the ship, which may be determined based on ship speed, weight, wind, current, waves and trim.

Most ships use fuel and therefore fuel consumption is the most common used power consumption. However, also other power sources of are possible, such as nuclear power or electric power. Therefore power consumption is not limited to fuel consumption, such as diesel, petrol and gas consumption, but is applicable also for other energy sources.

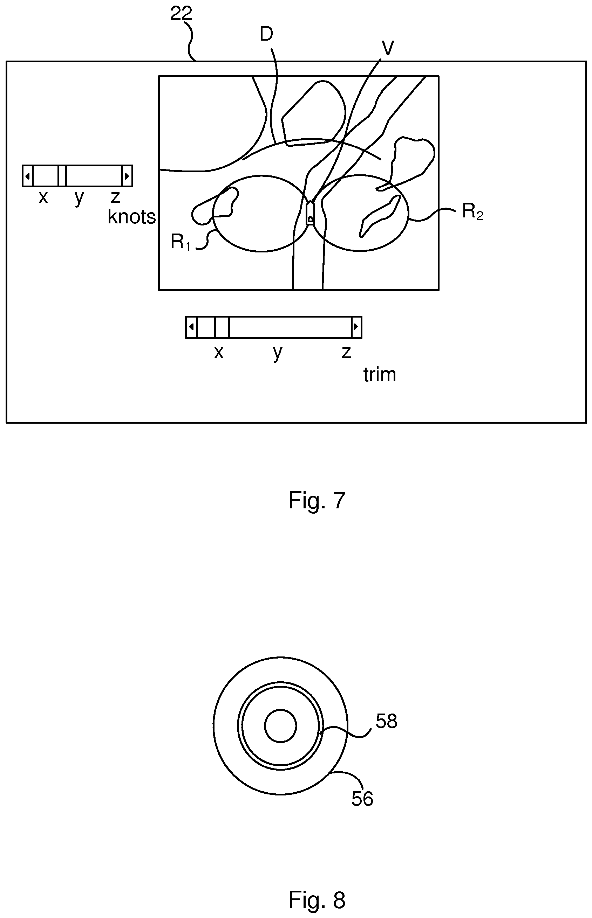

Fig. 7 schematically shows a view of the display 22 on which a representation V of the ship is shown together with port and starboard turning radii R₁ and R₂ as well as a braking distance D. In the figure also trim and speed settings are shown. All this data has been determined for a deformed ship hull.

The position of the ship is in fig. 7 displayed in a physical environment. The position of the ship may be obtained from the sensor handling computer 36 and data about the physical environment may be obtained through obtaining a chart of an area covering the positions for the chart computer 34. A graphical representation V of the ship may then be placed on the chart in a position corresponding to the sensed ship position. Also route data concerning the route of the ship may be obtained from the chart computer and plotted in the chart.

In fig. 7 there is also shown turning radii R₁ and R₂ on the starboard and port sides of the ship V and a braking distance D. Also fuel consumption/trim may be shown as well as ship speed in knots.

Furthermore, once an optimal trim that has considered the hull shape deviation has been determined, the manoeuvring handling arrangement may directly apply it in the manoeuvring. It may thus be forwarded as a control command to the manoeuvring control computer, which then controls the ship to obtain the optimal trim.

The manoeuvrability handling arrangement may be implemented using software. It may thus be implemented using computer program code, which may be provided on one or more data carriers which performs the functionality of the manoeuvrability signalling arrangement when the program code thereon is being loaded into the bridge computer. One such data carrier 56 with computer program code 58, in the form of a CD ROM disc, is schematically shown in fig. 8. Such computer program may as an alternative be provided on another server and downloaded therefrom into the bridge computer.

The manoeuvrability handling arrangement is not limited to the bridge computer. It may for instance also comprise the user interface 22. It may furthermore comprise the manoeuvring control computer. It is also possible that it comprises the sensor handling computer perhaps together with the sensors and/or the load computer.

Furthermore, the invention is not limited to being performed on a vessel. All or parts of the functionality may be provided on a computer with which the ship system communicates, for instance a computer on land. The manoeuvrability handling arrangement may for instance be provided on a computer on land that receives load data from a ship and determines the adjusted trim based on an estimated ship hull deformation and sends to the ship. It is also possible with some functions being performed on land and others on-board the ship.

## Claims

1. A method of handling manoeuvrability of a vessel (10) equipped with a hull (16), the method being performed by a manoeuvrability handling arrangement (20) and comprising the steps of::
- obtaining (42) current hull shape defining data for at least three positions of the hull (16) along the length of the vessel,
- comparing (44) said current hull shape defining data with corresponding reference data,
- determining (52) state of deformation for a type of deformation of the hull (16) based on the deviations of said current hull shape defining data from said corresponding reference data, where the type of deformation is set based on the mechanical properties of the vessel, and
- applying (54) the state of deformation of the set type in a manoeuvring handling function for improving handling of the vessel,
**characterized in that**
the manoeuvring handling function comprises a trim handling function, the output data of which comprises power consumption.

2. The method according to claim 1, further comprising determining (50) type of deformation based on the deviations of said current hull shape defining data from the corresponding reference data.

3. The method according to claim 1 or 2, further comprising determining an optimal state of the deformation with regard to said power consumption.

4. The method according to claim 3, further comprising determining an optimal trim for the optimal state.

5. The method according to any previous claim, wherein applying state of deformation of the set type comprises using the state for setting parameters in a mathematical model of the set type of deformation.

6. The method according to claim 5, wherein the state is applied through being a parameter in the trim handling function, where the trim handling function comprises the model of the set type of deformation.

7. The method according to any of claims 1 - 5, wherein the state is applied in a correction function, which is a function of the state in the set type of deformation, which correction function adjusts input parameters of the manoeuvring handling function for taking account of the hull deformation.

8. The method according to claim 7, wherein the correction function is configured to employ a set of data of actual or physical model tests or simulations of the joint effect of hull deformation and trim on power consumption for various vessel operating conditions.

9. The method according to claim 8, wherein the correction function is constructed using numerical predictions on the data in the set.

10. The method according to claim 8, wherein the correction function employs an black box model comprising the set of data.

11. The method according to any of claims 8 - 10, wherein the correction function employs an empirical or semi-empirical model comprising the set of data.

12. An arrangement (20) for handling the manoeuvrability of a vessel equipped with a hull (16), the arrangement comprising a computer comprising a manoeuvring handling unit (38) and a deformation handling unit (40) configured to:
- obtain current hull shape defining data for at least three positions of the hull (16) along the length of the vessel,
- compare said current hull shape defining data with corresponding reference data,
- determine state of deformation for a type of deformation of the hull (16) based on the deviations of said current hull shape defining data from said corresponding reference data, where the type of deformation is set based on the mechanical properties of the vessel, and
- apply the state of deformation of the set type in the manoeuvring handling function provided by the manoeuvring handling unit (38) for improving handling of the vessel,
**characterized in that**
the manoeuvring handling function comprises a trim handling function, the output data of which comprises power consumption.

13. The arrangement according to claim 12, the deformation handling unit (40) being further configured to determine type of deformation based on the deviations of said current hull shape defining data from the corresponding reference data.

14. The arrangement (20) according to claim 12 or 13, wherein the manoeuvring handling unit is configured to determine an optimal state of the deformation with regard to said power consumption.

15. The arrangement (20) according to claim 14, wherein the manoeuvring handling unit is further configured to determine an optimal trim for the optimal state.

16. The arrangement according to any of claims 12 - 15, wherein the deformation handling unit, when applying state of deformation of the set type is configured to use the state for setting parameters in a mathematical model of the set type of deformation.

17. The arrangement (20) according to claim 16, wherein the deformation handling unit is configured to apply the state as a parameter in the trim handling function, where the trim handling function comprises the model of the set type of deformation.

18. The arrangement (20) according to any of claims 12 - 16, further comprising a parameter correction unit (39) comprising a correction function of the state and wherein the deformation handling unit (40) is configured to apply the state in the correction function, which is a function of the state in the set type of deformation, and the parameter correction unit (39) is configured to adjust, in the correction function, input parameters of the manoeuvring handling function for taking account of the hull deformation.

19. A computer program product for handling manoeuvrability of a vessel (10) equipped with a hull (16), said computer program product being provided on a data carrier (56) comprising computer program code (58) configured to cause a manoeuvrability handling arrangement to, when said computer program code is loaded into the manoeuvrability handling arrangement
- obtain current hull shape defining data concerning at least three positions of the hull along the length of the vessel,
- compare current hull shape defining data with corresponding reference data,
- determine state of deformation for a type of deformation based on the deviations of said current hull shape defining data from said corresponding reference data, where the type of deformation is set based on the mechanical properties of the vessel, and
- apply the state of deformation of the set type in a manoeuvring handling function for improving handling of the vessel, **characterized in that** the manoeuvring handling function comprises a trim handling function, the output data of which comprises power consumption.

## Patentansprüche

1. Verfahren zum Handhaben der Manövrierbarkeit eines Schiffs (10), das mit einem Rumpf (16) ausgestattet ist, wobei das Verfahren von einer Manövrierbarkeitshandhabungsanordnung (20) ausgeführt wird und die folgenden Schritte umfasst:
- das Erlangen (42) von Daten, die eine aktuelle Rumpfform definieren, für mindestens drei Positionen des Rumpfs (16) entlang der Länge des Schiffs,
- das Vergleichen (44) der Daten, die eine aktuelle Rumpfform definieren, mit entsprechenden Referenzdaten,
- das Bestimmen (52) eines Verformungszustands für eine Art von Verformung des Rumpfs (16) auf Grundlage der Abweichungen der Daten, die eine aktuelle Rumpfform definieren, von den entsprechenden Referenzdaten, wobei die Art von Verformung auf Grundlage der mechanischen Eigenschaften des Schiffs festgelegt ist, und
- das Anwenden (54) des Verformungszustands der festgelegten Art in einer Manövrierhandhabungsfunktion zum Verbessern der Handhabung des Schiffs, **dadurch gekennzeichnet, dass** die Manövrierhandhabungsfunktion eine Trimmungshandhabungsfunktion umfasst, deren Ausgangsdaten einen Energieverbrauch beinhalten.

2. Verfahren nach Anspruch 1, ferner umfassend das Bestimmen (50) einer Art von Verformung auf Grundlage der Abweichungen der Daten, die eine aktuelle Rumpfform definieren, von den entsprechenden Referenzdaten.

3. Verfahren nach Anspruch 1 oder 2, ferner umfassend das Bestimmen eines optimalen Zustands der Verformung hinsichtlich des Energieverbrauchs.

4. Verfahren nach Anspruch 3, ferner umfassend das Bestimmen einer optimalen Trimmung für den optimalen Zustand.

5. Verfahren nach einem vorhergehenden Anspruch, wobei das Anwenden des Verformungszustands der festgelegten Art das Verwenden des Zustands zum Einstellen von Parametern in einem mathematischen Modell der festgelegten Art von Verformung beinhaltet.

6. Verfahren nach Anspruch 5, wobei der Zustand dadurch angewendet wird, dass er ein Parameter in der Trimmungshandhabungsfunktion ist, wobei die Trimmungshandhabungsfunktion das Modell der festgelegten Art von Verformung beinhaltet.

7. Verfahren nach einem der Ansprüche 1-5, wobei der Zustand in einer Korrekturfunktion angewendet wird, die eine Funktion des Zustands in der festgelegten Art von Verformung ist, wobei die Korrekturfunktion Eingangsparameter der Manövrierhandhabungsfunktion einstellt, um die Rumpfverformung zu berücksichtigen.

8. Verfahren nach Anspruch 7, wobei die Korrekturfunktion dazu ausgebildet ist, einen Satz von Daten von tatsächlichen Tests oder Tests an einem physikalischen Modell oder Simulationen der gemeinsamen Wirkung von Rumpfverformung und Trimmung auf den Energieverbrauch für verschiedene Schiffsbetriebsbedingungen zu verwenden.

9. Verfahren nach Anspruch 8, wobei die Korrekturfunktion unter Verwendung numerischer Vorhersagen zu den Daten in dem Satz konstruiert ist.

10. Verfahren nach Anspruch 8, wobei die Korrekturfunktion ein Blackbox-Modell verwendet, das den Datensatz beinhaltet.

11. Verfahren nach einem der Ansprüche 8-10, wobei die Korrekturfunktion ein empirisches oder semi-empirisches Modell verwendet, das den Datensatz beinhaltet.

12. Anordnung (20) zum Handhaben der Manövrierbarkeit eines Schiffs, das mit einem Rumpf (16) ausgestattet ist, wobei die Anordnung einen Computer aufweist, der eine Manövrierhandhabungseinheit (38) und eine Verformungshandhabungseinheit (40) aufweist, dazu ausgebildet:
- Daten, die eine aktuelle Rumpfform definieren, für mindestens drei Positionen des Rumpfs (16) entlang der Länge des Schiffs zu erlangen,
- die Daten, die eine aktuelle Rumpfform definieren, mit entsprechenden Referenzdaten zu vergleichen,
- einen Verformungszustand für eine Art von Verformung des Rumpfs (16) auf Grundlage der Abweichungen der Daten, die eine aktuelle Rumpfform definieren, von den entsprechenden Referenzdaten zu bestimmen, wobei die Art von Verformung auf Grundlage der mechanischen Eigenschaften des Schiffs festgelegt ist, und
- den Verformungszustand der festgelegten Art in der Manövrierhandhabungsfunktion, die von der Manövrierhandhabungseinheit (38) bereitgestellt wird, anzuwenden, um die Handhabung des Schiffs zu verbessern, **dadurch gekennzeichnet, dass** die Manövrierhandhabungsfunktion eine Trimmungshandhabungsfunktion umfasst, deren Ausgangsdaten einen Energieverbrauch beinhalten.

13. Anordnung nach Anspruch 12, wobei die Verformungshandhabungseinheit (40) ferner dazu ausgebildet ist, eine Art von Verformung auf Grundlage der Abweichungen der Daten, die eine aktuelle Rumpfform definieren, von den entsprechenden Referenzdaten zu bestimmen.

14. Anordnung (20) nach Anspruch 12 oder 13, wobei die Manövrierhandhabungseinheit dazu ausgebildet ist, einen optimalen Zustand der Verformung hinsichtlich des Energieverbrauchs zu bestimmen.

15. Anordnung (20) nach Anspruch 14, wobei die Manövrierhandhabungseinheit ferner dazu ausgebildet ist, eine optimale Trimmung für den optimalen Zustand zu bestimmen.

16. Anordnung nach einem der Ansprüche 12-15, wobei die Verformungshandhabungseinheit, beim Anwenden des Verformungszustands der festgelegten Art, dazu ausgebildet ist, den Zustand zum Einstellen von Parametern in einem mathematischen Modell der festgelegten Art von Verformung zu verwenden.

17. Anordnung (20) nach Anspruch 16, wobei die Verformungshandhabungseinheit dazu ausgebildet ist, den Zustand als einen Parameter in der Trimmungshandhabungsfunktion anzuwenden, wobei die Trimmungshandhabungsfunktion das Modell der festgelegten Art von Verformung beinhaltet.

18. Anordnung (20) nach einem der Ansprüche 12-16, ferner aufweisend eine Parameterkorrektureinheit (39), die eine Korrekturfunktion des Zustands aufweist, und wobei die Verformungshandhabungseinheit (40) dazu ausgebildet ist, den Zustand in der Korrekturfunktion anzuwenden, die eine Funktion des Zustands in der festgelegten Art von Verformung ist, und die Parameterkorrektureinheit (39) dazu ausgebildet ist, in der Korrekturfunktion Eingangsparameter der Manövrierhandhabungsfunktion einzustellen, um die Rumpfverformung zu berücksichtigen.

19. Computerprogrammprodukt zum Handhaben der Manövrierbarkeit eines Schiffs (10), das mit einem Rumpf (16) ausgestattet ist, wobei das Computerprogrammprodukt auf einem Datenträger (56) bereitgestellt ist, der Computerprogrammcode (58) enthält, der dazu ausgebildet ist, zu bewirken, dass eine Manövrierbarkeitshandhabungsanordnung, wenn der Computerprogrammcode in die Manövrierbarkeitshandhabungsanordnung geladen wird,
- Daten, die eine aktuelle Rumpfform definieren, in Bezug auf mindestens drei Positionen des Rumpfs entlang der Länge des Schiffs erlangt,
- Daten, die eine aktuelle Rumpfform definieren, mit entsprechenden Referenzdaten vergleicht,
- einen Verformungszustand für eine Art von Verformung auf Grundlage der Abweichungen der Daten, die eine aktuelle Rumpfform definieren, von den entsprechenden Referenzdaten bestimmt, wobei die Art von Verformung auf Grundlage der mechanischen Eigenschaften des Schiffs festgelegt ist, und
- den Verformungszustand der festgelegten Art in einer Manövrierhandhabungsfunktion anwendet, um die Handhabung des Schiffs zu verbessern, **dadurch gekennzeichnet, dass** die Manövrierhandhabungsfunktion eine Trimmungshandhabungsfunktion umfasst, deren Ausgangsdaten einen Energieverbrauch beinhalten.

## Revendications

1. Procédé de traitement de la manoeuvrabilité d'un navire (10) équipé d'une coque (16), ce procédé étant exécuté par un système de traitement de manoeuvrabilité (20) et comprenant les étapes consistant à :
- obtenir (42) des données de définition de forme de la coque courante pour au moins trois positions de la coque (16) le long de la longueur du navire,
- comparer (44) lesdites données de définition de forme de la coque courante avec des données de référence correspondantes,
- déterminer (52) l'état de déformation pour un type de déformation de la coque (16) en se basant sur les écarts desdites données de définition de forme de la coque courante par rapport auxdites données de référence correspondantes, ce type de déformation étant défini en se basant sur les propriétés mécaniques du navire, et
- appliquer (54) l'état de déformation du type défini dans une fonction de traitement de manoeuvre pour améliorer le maniement du navire,
**caractérisé en ce que**
la fonction de traitement de manoeuvre comprend une fonction de traitement de l'assiette, dont les données de sortie comprennent la consommation d'énergie.

2. Procédé selon la revendication 1, comprenant en outre la détermination (50) du type de déformation en se basant sur les écarts desdites données de définition de forme de la coque courante par rapport aux données de référence correspondantes.

3. Procédé selon la revendication 1 ou 2, comprenant en outre la détermination d'un état optimal de la déformation relativement à ladite consommation d'énergie.

4. Procédé selon la revendication 3, comprenant en outre la détermination d'une assiette optimale pour l'état optimal.

5. Procédé selon l'une quelconque des revendications précédentes, dans lequel l'application de l'état de déformation du type défini comprend l'utilisation de cet état pour définir des paramètres dans un modèle mathématique du type défini de déformation.

6. Procédé selon la revendication 3, dans lequel l'état est appliqué en étant un paramètre dans la fonction de traitement d'assiette, la fonction de traitement d'assiette comprenant le modèle du type défini de déformation.

7. Procédé selon l'une quelconque des revendications 1 à 5, dans lequel l'état est appliqué dans une fonction de correction, qui est une fonction de l'état dans le type défini de déformation, laquelle fonction de correction modifie des paramètres d'entrée de la fonction de traitement de manoeuvre pour tenir compte de la déformation de la coque.

8. Procédé selon la revendication 7, dans lequel la fonction de correction est configurée de façon à employer un ensemble de données de tests ou de simulations de modèles réels ou physiques de l'effet combiné de la déformation de la coque et de l'assiette sur la consommation d'énergie pour diverses conditions d'exploitation du navire.

9. Procédé selon la revendication 8, dans lequel la fonction de correction est construite en utilisant des prédictions numériques sur les données dans l'ensemble de données.

10. Procédé selon la revendication 8, dans lequel la fonction de correction emploie un modèle de boîte noire comprenant l'ensemble de données.

11. Procédé selon l'une quelconque des revendications 8 à 10, dans lequel la fonction de correction emploie un modèle empirique ou semi-empirique comprenant l'ensemble de données.

12. Système (20) pour traiter la manoeuvrabilité d'un navire équipé d'une coque (16), ce système comprenant un ordinateur comprenant une unité de traitement de manoeuvre (38) et une unité de traitement de déformation (40) configurée de façon à :
- obtenir des données de définition de forme de la coque courante pour au moins trois positions de la coque (16) le long de la longueur du navire,
- comparer lesdites données de définition de forme de la coque courante avec des données de référence correspondantes,
- déterminer l'état de déformation pour un type de déformation de la coque (16) en se basant sur les écarts desdites données de définition de forme de la coque courante par rapport aux données de référence correspondantes, ce type de déformation étant défini en se basant sur les propriétés mécaniques du navire, et
- appliquer l'état de déformation du type défini dans la fonction de traitement de manoeuvre fournie par l'unité de traitement de manoeuvre (38) pour améliorer le maniement du navire,
**caractérisé en ce que**
la fonction de traitement de manoeuvre comprend une fonction de traitement de l'assiette, dont les données de sortie comprennent la consommation d'énergie.

13. Système selon la revendication 12, l'unité de traitement de déformation (40) étant configurée en outre de façon à déterminer le type de déformation en se basant sur les écarts desdites données de définition de la forme de la coque courante par rapport aux données de référence correspondantes.

14. Système (20) selon la revendication 12 ou 13, dans lequel l'unité de traitement de manoeuvre est configurée de façon à déterminer l'état optimal de la déformation relativement à ladite consommation d'énergie.

15. Système (20) selon la revendication 14, dans lequel l'unité de traitement de manoeuvre est configurée en outre de façon à déterminer l'assiette optimale pour l'état optimal.

16. Système (20) selon l'une quelconque des revendications 12 à 15, dans lequel l'unité de traitement de déformation, lorsqu'elle applique l'état de déformation du type défini, est configurée de façon à utiliser l'état pour définir les paramètres dans un modèle mathématique du type défini de déformation.

17. Système (20) selon la revendication 16, dans lequel l'unité de traitement de déformation est configurée de façon à appliquer l'état comme un paramètre dans la fonction de traitement de l'assiette, la fonction de traitement de l'assiette comprenant le modèle du type défini de déformation.

18. Système (20) selon l'une quelconque des revendications 12 à 16, comprenant en outre une unité de correction de paramètres (39) comprenant une fonction de correction de l'état et dans lequel l'unité de traitement de déformation (40) est configurée de façon à appliquer l'état dans la fonction de correction, qui est une fonction de l'état dans le type défini de déformation, et l'unité de correction de paramètres (39) est configurée de façon à modifier, dans la fonction de correction, des paramètres d'entrée de la fonction de traitement de manoeuvre pour tenir compte de la déformation de la coque.

19. Produit programme informatique pour traiter la manoeuvrabilité d'un navire (10) équipé d'une coque (16), ledit produit programme informatique étant fourni sur un support de données (56) comprenant un code de programme (58) configuré de façon à faire en sorte qu'un système de traitement de manoeuvrabilité, lorsque ledit code de programme informatique est chargé dans ce système de traitement de manoeuvrabilité, exécute les actions suivantes :
- l'obtention des données de définition de forme de la coque courante concernant au moins trois positions de la coque le long de la longueur du navire,
- la comparaison desdites données de définition de forme de la coque courante avec des données de référence correspondantes,
- la détermination de l'état de déformation pour un type de déformation en se basant sur les écarts desdites données de définition de forme de la coque courante par rapport auxdites données de référence correspondantes, ce type de déformation étant défini en se basant sur les propriétés mécaniques du navire, et
- l'application de l'état de déformation du type défini dans une fonction de traitement de manoeuvre pour améliorer le maniement du navire,
**caractérisé en ce que**
la fonction de traitement de manoeuvre comprend une fonction de traitement de l'assiette, dont les données de sortie comprennent la consommation d'énergie.
